Europäisches Patentamt

European Patent Office

Office européen des brevets

(19)

(11) Veröffentlichungsnummer: **0 015 372 B1**

(12) **EUROPÄISCHE PATENTSCHRIFT**

(45) Veröffentlichungstag der Patentschrift:
12.05.82

(21) Anmeldenummer: 80100305.4

(22) Anmeldetag: **22.01.80**

(51) Int. Cl.³: **B 23 B 17/00,** B 23 Q 1/02

(54) **Drehmaschine.**

(30) Priorität: **25.01.79 DE 2902730**

(43) Veröffentlichungstag der Anmeldung:
**17.09.80 Patentblatt 80/19**

(45) Bekanntmachung des Hinweises auf die Patenterteilung:
**12.05.82 Patentblatt 82/19**

(84) Benannte Vertragsstaaten:
**AT CH DE FR GB IT SE**

(56) Entgegenhaltungen:
**CH-A-82 472**
**DD-A-129 631**
**DE-A1-2 637 301**
**DE-C-698 430**
**DE-C-847 671**
**DE-U-1 847 667**
**US-A-3 311 004**
**US-A-3 546 984**

(73) Patentinhaber: **A. Monforts GmbH & Co,**
**Schwalmstrasse 301, D-4050 Mönchengladbach 2 (DE)**

(72) Erfinder: **van der Horst, Eberhard,**
**Anton-Heinen-Strasse 16, D-5140 Erkelenz (DE)**

(74) Vertreter: **von Creytz, Dietrich, Schwalmstrasse 301,**
**D-4050 Mönchengladbach 2 (DE)**

## Drehmaschine

Die Erfindung betrifft eine Drehmaschine mit wenigstens einem Ständer zur Aufnahme einer parallel zur Werkstückspindelachse verlaufenden Längsführung eines Werkzeugträgers, wobei das aus dem Ständer und der Führung gebildete System mit Hilfe eines parallel zu der Führung verlaufenden Stützrohres versteift ist und ein Ständer zugleich die Werkstückspindel und deren Antriebe aufnimmt.

Eine Drehmaschine dieser Art wird in der DE-PS 847 671 beschrieben. Das Drehbankbett dieser Maschine besitzt gesonderte Führungen für den Support sowie für den Reitstock und besteht zwischen den beiden Ständern aus parallelen Rohren, von denen eines zum Führen des Supports und ein anderes zum Führen des Reitstocks und gegebenenfalls von Lünetten dient. Eine ähnliche Maschine wird auch in der US-PS 3 546 984 beschrieben. Parallel zu der Längsführung des als Schlitten ausgebildeten Werkzeugträgers wird hierbei ein Stützrohr mit gegenüber der Steifheit der Führung großer Steifheit vorgesehen.

Die Längsführungen bei diesen und anderen bekannten Maschinen sind den üblichen Anforderungen entsprechend genau auszurichten und in der gewünschten Lage so zu stabilisieren, daß die Maschine auch bei starker Belastung exakt arbeitet. Die Längsführungen müssen daher sehr massiv, d. h. zum Beispiel bei einer zylindrischen Führung mit relativ großem Durchmesser, ausgebildet werden. Das hat zur Folge, daß entsprechend große Flächen bis zum Erreichen der geforderten Abmessungen — bei Genauigkeitsanforderungen von weniger als $^1/_{100}$ mm — zu bearbeiten sind.

Der Erfindung liegt die Aufgabe zugrunde, den Aufwand zum Herstellen und Erreichen einer sowohl stabilen als auch den Genauigkeitsanforderungen exakt entsprechenden Längsführung zu vermindern. Die erfindungsgemäße Lösung besteht bei der eingangs genannten Drehmaschine darin, daß der Arbeitsraum und/oder der Antriebsraum der Maschine innerhalb des Stützrohrs liegt.

Während bei bekannten Maschinen der Durchmesser des Stützrohrs zwar wesentlich größer als die entsprechenden Abmessungen der parallel verlaufenden Längsführung ausgebildet werden kann, soll die Dimension des Stützrohres aber in allen Fällen nicht so groß sein, daß wertvoller Raum der Maschine verschwendet würde. Demgegenüber sieht nun die Erfindung vor, die gesamte Maschine bzw. wenigstens deren Arbeitsraum oder Antriebsraum ganz von dem Stützrohr zu umspannen. Durch die Erfindung wird also erreicht, daß das Stützrohr nicht nur zum Stabilisieren des Systems von Längsführung und Ständer bzw. Ständern beiträgt und auf diese Weise den Aufwand zum Herstellen der Längsführung entsprechend vermindert, sondern auch darin, daß das Stützrohr gleichzeitig sowohl als unfallverhütendes und lärmdämmendes Außengehäuse als auch als Verkleidung der Maschine wirkt. Ersichtlich wird die Maschine durch ein erfindungsgemäß stabilisierendes und zumindest den Arbeitsraum ganz umspannendes Stützrohr so versteift, daß besondere steife Fundamente entfallen können.

Das erfindungsgemäße Stützrohr hat in der Regel einen kreisförmigen Querschnitt. Es kommt aber nicht darauf an, die Kreisform immer exakt einzuhalten, es können beispielsweise bestimmten Bauteilen angepaßte Ein- und Ausbuchtungen vorgesehen werden. Wesentlich ist allein die stabilitätsfördernde geschlossene Kontur.

Wenn das erfindungsgemäße, den Arbeitsraum umspannende Stützrohr eine zum Erfüllen seiner eigentlichen Aufgabe, nämlich der Stabilisierung des aus Ständern und Längsführung bestehenden Systems entsprechende Wandstärke, von z. B. 10 bis 20 mm, aufweist, ist es gleichzeitig so stark, daß etwa beim Betrieb der Maschine sich von der Spindel lösende Bauteile innerhalb des als Gehäuse dienenden Stützrohrs abgefangen werden.

Bei hohen Schnittgeschwindigkeiten von etwa 1000 m/min und mehr hat sich bei bisherigen Maschinen eine arbeitsmedizinisch unzulässige Lärmentwicklung eingestellt. Unter anderem werden auch Abdeckbleche und Blechgehäuse erregt und wirken als zusätzliche Lärmquellen. Unerwarteterweise werden durch das erfindungsgemäße, zumindest den Arbeitsraum ganz umspannende Stützrohr gerade betreffend die Schalldämmung ausgezeichnete Ergebnisse erzielt. Die im Hinblick auf die Aufgabe des Stützrohrs, die Maschine zu versteifen, relativ starke Rohrwandung, besitzt nämlich eine so große Masse, daß Schallschwingungen schon ohne besondere Vorkehrungen abgeschirmt werden. Selbstverständlich kann die Schalldämmung durch übliche Dämmbeschichtungen noch verbessert werden.

Ebenso wie bei den Stützrohren relativ kleinen Durchmessers vorgenannter Art soll auch bei den letztgenannten gleichzeitig als Gehäuse dienenden Stützrohren die Rohrachse parallel zur Drehachse der Werkstückspindel ausgerichtet sein. Um ein Be- und Entladen der Werkstückspindel und ein Einrichten des Werkzeugrevolvers zu ermöglichen, ist es ferner zweckmäßig, wenn ein den Arbeitsraum umspannendes Stützrohr auf seinem Umfang wenigstens ein zu verschließendes und den Arbeitsraum zugänglich machendes Fenster aufweist. Dieses Fenster kann beispielsweise eine am Rohrumfang geführte Schiebetür sein. Die beiden Längsenden des wenigstens den Arbeitsraum der Maschine ganz umspannenden Stützrohrs können ohne besonderen Aufwand im wesentlichen mit Hilfe der die Werkzeugschlitten-Führung tragenden Ständer und gegebenenfalls weitere Abdeckbleche bzw. -platten verschlossen werden.

Vorzugsweise soll das Stützrohr — gegebenenfalls einschließlich eventueller zu verschließender Fenster und Seitenflächen — als gegenüber dem Späneflug und eventuell abgeschleuderten Werkstücken widerstandsfähiger und außerdem schalldämmender Käfig ausgebildet sein. Dieser Käfig kann im unteren Bereich als Wasserschale dienen und an den Wänden Führungen bzw. Halter zum Verfahren bzw. Befestigen bestimmter Teile der Maschine aufweisen. Natürlich ist in der Regel eine besondere Öffnung zum Herausführen eines Späneförderers erforderlich. Im Hinblick auf die Schalldämmung des Späneförder-Ausgangs soll dieser beispielsweise einen Vorhang aus Blei- oder Hartgummifäden aufweisen. Außerdem kann es zweckmäßig sein, an gesonderter Stelle, z. B. an der Oberseite, des Stützrohrs einen Abzug vorzusehen, durch den unter anderem die beim Drehen erzeugte Wärme abzuführen ist. Vorzugsweise kann die zum Kühlen von Motoren, Hydraulik usw. angesaugte Luft zum Lüften des Arbeitsraumes benutzt werden.

Anhand der schematischen Darstellung wird ein Ausführungsbeispiel der Erfindung näher erläutert.

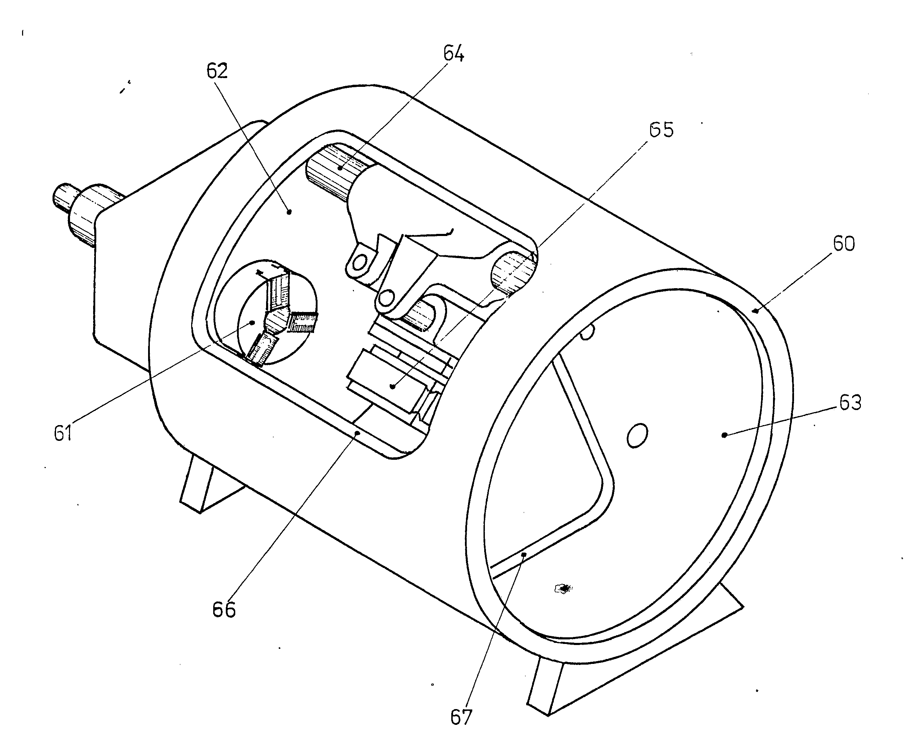

In der Zeichnung werden die erfindungswesentlichen Teile zugunsten der im Prinzip in üblicher Weise auszubildenden Maschineneinheiten, insbesondere des Arbeitsraums, hervorgehoben. Zumindest der gesamte Arbeitsraum der dargestellten Maschine ist in das erfindungsgemäße Stützrohr 60 eingekapselt. Letzteres reicht in der Längsrichtung wenigstens von dem die Werkstückspindel 61 tragenden Ständer 62 bis zum gegenüberliegenden Ständer 63. Zwischen den Ständern 62 und 63 ist die u. a. durch das Stützrohr 60 zu stabilisierende Längsführung 64 einschließlich der zugehörigen Verdrehsicherung aufgespannt. Der Werkzeugschlitten 65 ist in der Längsrichtung der Maschine, d. h. parallel zur Längsrichtung der Achse der Werkstückspindel, verschiebbar gelagert.

Das erfindungsgemäße, den Arbeitsraum und/oder den (auf der Rückseite des Ständers 62 befindlichen) Antriebsraum der Maschine aufnehmende Stützrohr 60 ist wegen seiner Aufgabe, die Maschine zu versteifen, aus relativ starkwandigem Material herzustellen. Es kann sich beispielsweise um ein geschweißtes oder auch um ein nahtlos gewalztes Stahlrohr von etwa 10 bis 20 mm, vorzugsweise etwa 15 mm Wandstärke handeln. Das Stützrohr 60 kann also — wie weiter oben bereits erläutert — gleichzeitig als Unfallschutz, Schalldämmung und (im unteren Bereich des Arbeitsraums) als Wasserschale bzw. (im unteren Bereich des Antriebsraums) als Ölwanne dienen. Da die gesamte Maschine durch das erfindungsgemäße den Arbeitsraum und/oder den Antriebsraum umfassende Stützrohr 60 vollkommen versteift ist, ist ein besonderes stabilisierendes Fundament nicht erforderlich.

Das Stützrohr 60 gemäß Zeichnung besitzt zweckmäßig einige wenige Öffnungen, beispielsweise ein verschließbares Fenster 66, welches einen bequemen Zugriff zur Werkstückspindel 61 und zu den Werkzeugen des Werkzeugschlittens 65 zuläßt. Außerdem ist in der Regel ein als Schleuse ausgebildetes Loch 67 für einen Spändeförderer erforderlich. Zum Abführen der beim Drehen entstehenden Wärme und zum sonstigen Belüften des Innern der Maschine sind schließlich nicht gezeichnete Abluftöffnungen vorteilhaft.

## Patentansprüche

1. Drehmaschine mit wenigstens einem Ständer (62, 63) zur Aufnahme einer parallel zur Werkstückspindelachse verlaufenden Längsführung (64) eines Werkzeugträgers, wobei das aus dem Ständer (62, 63) und der Führung (64) gebildete System mit Hilfe wenigstens eines parallel zu der Führung verlaufenden Stützrohres (60) versteift ist und ein Ständer zugleich die Werkstückspindel (61) und deren Antriebe aufnimmt, dadurch gekennzeichnet, daß der Arbeitsraum und/oder der Antriebsraum der Maschine innerhalb des Stützrohrs (60) liegt.

2. Drehmaschine nach Anspruch 1, dadurch gekennzeichnet, daß die Achse des Stützrohrs (60) parallel zur Drehachse der Werkstückspindel (61) ausgerichtet ist.

3. Drehmaschine nach Anspruch 1 oder 2, dadurch gekennzeichnet, daß ein den Arbeitsraum umspannendes Stützrohr (60) auf seinem Umfang wenigstens ein zu verschließendes und den Arbeitsraum zugänglich machendes Fenster (66) aufweist.

4. Drehmaschine nach einem oder mehreren der Ansprüche 1 bis 3, dadurch gekennzeichnet, daß bei einem wenigstens den Arbeitsraum der Maschine ganz umspannenden Stützrohr (60) dessen Rohrenden mit Hilfe der die Werkzeugschlitten-Führung (65) tragenden Ständer (62, 63) und gegebenenfalls weitere Abdeckflächen oder -platten verschlossen ist.

5. Drehmaschine nach einem oder mehreren der Ansprüche 1 bis 4, dadurch gekennzeichnet, daß das Stützrohr (60) einschließlich eventueller verschließender Fenster (66) und zu verschließender Seitenflächen (67) als gegenüber einem Späne- und Werkstückflug widerstandsfähiger Käfig bzw. Panzerverkleidung ausgebildet ist.

6. Drehmaschine nach einem oder mehreren der Ansprüche 1 bis 5, dadurch gekennzeichnet, daß die den Arbeitsraum umspannende, aus Stützrohr (60) und Seitenteilen (62, 63) bestehende Panzerverkleidung als Schallisolierung ausgebildet ist.

7. Drehmaschine nach einem oder mehreren der Ansprüche 1 bis 6, dadurch gekennzeichnet, daß ein mindestens den Arbeitsraum umspannendes Stützrohr (60) auf der Oberseite einen Abzug aufweist.

8. Drehmaschine nach einem oder mehreren der Ansprüche 1 bis 7, gekennzeichnet durch ein mindestens den Arbeitsraum umspannendes und im unteren Bereich als Wasserschale ausgebildetes Stützrohr (60).

## Claims

1. A lathe with at least one upright (62, 63) for receiving a longitudinal guide (64) — extending parallel to the axis of the workpiece spindle — of a tool support, in which the system formed from the upright (62, 63) and the guide (64) is reinforced by means of at least one support tube (60), extending parallel to the guide, and one upright receives both the workpiece spindle (61) and its drives, characterised in that the working space and/or the drive space of the machine is inside the support tube (60).

2. A lathe according to claim 1, characterised in that the axis of the support tube (60) is orientated parallel to the axis of rotation of the workpiece spindle (61).

3. A lathe according to claim 1 or 2, characterised in that the circumference of one support tube (60) encompassing the working space is provided with at least one window (66) which is to be closed and which renders the working space accessible.

4. A lathe according to one or several of claims 1 to 3, characterised in that, in the case of at least one support tube (60) completely encompassing the working space of the machine, the tube end thereof is closed by the uprights (62, 63) supporting the tool slide guide (65) and possibly by further cover surfaces or plates.

5. A lathe according to one or several of claims 1 to 4, characterised in that the support tube (60), including any closing windows (66) and lateral surfaces (67) to be closed, is formed as a cage or armoured casing which is resistant to flying chips and workpieces.

6. A lathe according to one or several of claims 1 to 5, characterised in that the armoured casing which encompasses the working space and consists of the support tube (60) and lateral parts (62, 63) is formed as a sound insulation.

7. A lathe according to one or several of claims 1 to 6, characterised in that a support tube (60) encompassing at least the working space is provided on the upper side with a vent.

8. A lathe according to one or several of claims 1 to 7, characterised by a support tube (60) encompassing at least the working space and formed in the lower region as a water basin.

## Revendications

1. Tour comprenant au moins un montant (62, 63) pour recevoir une glissière longitudinale de porte-outils (64) s'étendant parallèlement à l'axe de la broche porte-pièce, le système composé du montant (62, 63) et de la glissière (64) étant raidi à l'aide d'au moins un tube porteur (60) qui s'étend parallèlement à la glissière et un montant recevant en même temps la broche porte-pièce (61) et ses moyens d'entraînement, ce tour étant caractérisé en ce que le volume de travail et/ou le volume d'entraînement de la machine se trouvent à l'intérieur du tube porteur (60).

2. Tour suivant la revendication 1, caractérisé en ce que l'axe du tube porteur (60) est orienté parallèlement à l'axe de rotation de la broche porte-pièce (61).

3. Tour suivant la revendication 1 ou 2, caractérisé en ce qu'un tube porteur (60) qui entoure le volume de travail présente sur sa périphérie au moins une fenêtre (66) pouvant être obturée et qui rend le volume de travail accessible.

4. Tour suivant une ou plusieurs des revendications 1 à 3, caractérisé en ce que, dans le cas d'un tube porteur (60) qui entoure entièrement au moins le volume de travail de la machine, les extrémités de ce tube sont fermées à l'aide des montants (62, 63) qui portent la glissière (65) du chariot porte-outils et éventuellement par d'autres surfaces ou plaques de fermeture.

5. Tour suivant une ou plusieurs des revendications 1 à 4, caractérisé en ce que le tube porteur (60), y compris d'éventuelles fenêtres obturables (66) et des surfaces latérales (67) à obturer, est réalisé sous la forme d'une cage résistant aux projections de copeaux et de pièces ou sous la forme d'un revêtement de blindage.

6. Tour suivant une ou plusieurs des revendications 1 à 5, caractérisé en ce que le revêtement de blindage entourant le volume de travail, composé du tube porteur (60) et d'éléments latéraux (62, 63), est réalisé sous la forme d'un isolement phonique.

7. Tour suivant une ou plusieurs des revendications 1 à 6, caractérisé en ce qu'un tube porteur (60) qui entoure au moins le volume de travail présente des moyens d'évacuation à sa partie supérieure.

8. Tour suivant une ou plusieurs des revendications 1 à 7, caractérisé par un tube porteur (60) qui entoure au moins le volume de travail et est constitué dans la région inférieure sous la forme d'une cuvette à eau.